(19) Europäisches Patentamt
European Patent Office
Office européen des brevets

(11) **EP 0 878 719 B1**

(12) **EUROPÄISCHE PATENTSCHRIFT**

(45) Veröffentlichungstag und Bekanntmachung des Hinweises auf die Patenterteilung:
**29.10.2003   Patentblatt 2003/44**

(51) Int Cl.[7]: **G01S 17/66**, G01S 3/783, G01S 3/786

(21) Anmeldenummer: **98108232.4**

(22) Anmeldetag: **06.05.1998**

(54) **Zielerfassungsvorrichtung**

Target detection means

Moyens de détection de cibles

(84) Benannte Vertragsstaaten:
**DE FR GB SE**

(30) Priorität: **17.05.1997   DE 19720832**

(43) Veröffentlichungstag der Anmeldung:
**18.11.1998   Patentblatt 1998/47**

(73) Patentinhaber: **Diehl Stiftung & Co. KG**
**90478 Nürnberg (DE)**

(72) Erfinder: **Regensburger, Martin**
**92318 Neumarkt (DE)**

(74) Vertreter: **Diehl Patentabteilung**
**c/o Diehl Stiftung & Co.**
**Stephanstrasse 49**
**90478 Nürnberg (DE)**

(56) Entgegenhaltungen:
| | |
|---|---|
| DE-A- 3 202 432 | DE-A- 3 230 068 |
| DE-U- 9 417 451 | FR-A- 2 293 714 |
| US-A- 3 657 547 | US-A- 5 381 236 |

• PATENT ABSTRACTS OF JAPAN vol. 016, no. 167 (P-1342), 22. April 1992 & JP 04 013990 A (NARUTIKA YOSHIISA), 17. Januar 1992

**Beschreibung**

Die Erfindung betrifft eine Zielerfassungsvorrichtung gemäß dem Oberbegriff des Anspruches 1.

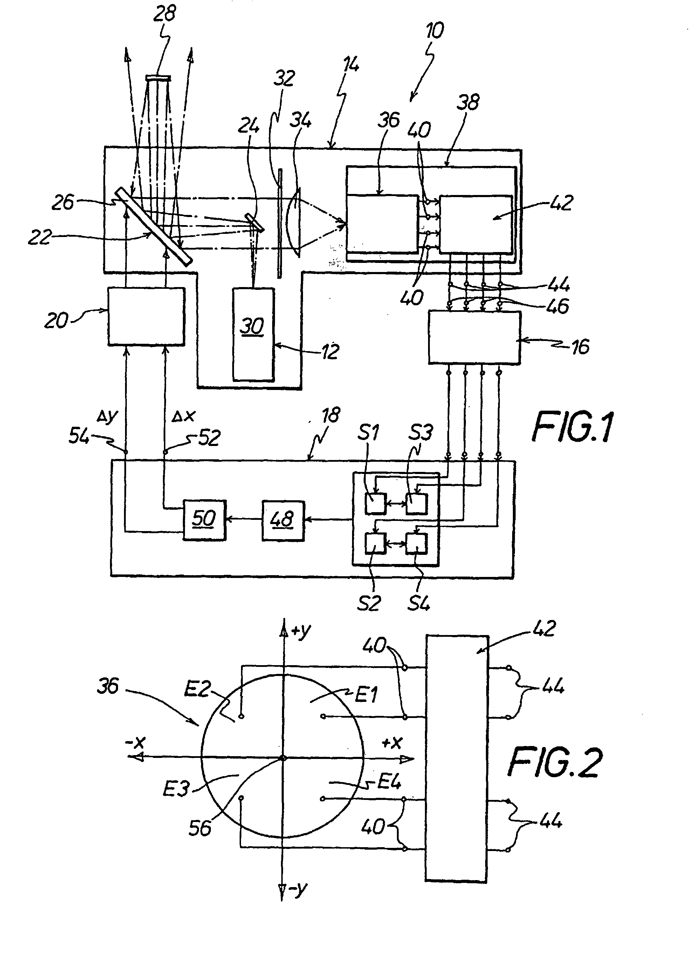

Eine solche Vorrichtung ist aus der FR 2293714 A als optoelektronisches System zur winkelmäßigen Lokalisierung eines von einer Laselquelle angestrahlten, reflektierenden Zieles mit Laserstrahlnachführung in Richtung auf den Heißpunkt (den sog. Glint) an jenem Ziel bekannt. Dafür wird die Ablage des Glint von der Referenzrichtung eines Detektors bestimmt, die orthogonal durch den Ursprung eines kartesischen Koordinatensystems verläuft. Der Detektor liefert die aktuelle Ablageinformation für die Nachführeinrichtung mittels einer Anordnung von Detektorelementen in den vier Quadranten des Koordinatensystems, bei der die Detektorelemente auf den Ecken eines Quadrates gelegen sind. Bezogen auf das Achsenkreuz ergibt sich eine Ablageinformation aus der Differenz zweier Summensignalen, die aus den beiden quer zur interessierenden Ablagerichtung einander benachbarten Detektorelementen gewonnen werden. Üblicherweise wird diese Differenz aus den beiden Summensignalen mit der Summe aller Detektorinformationen gewichtet. Bezogen auf die Detektorbenennung in Fig. 1 dieser Vorveröffentlichung stellt sich die Ablageinformation in X-Richtung somit dar als (6 + 7) - (5 + 8) / 6 + 7 + 5 + 8; wobei diese Bezugszahlen die individuellen Amplituden der Ausgangssignale der Detektorelemente in einem Betrachtungsmoment zum Gegenstand haben. Wenn der Laserstrahlreflex vom Ziel gerade genau auf den Koordinatenmittelpunkt projiziert ist, werden alle vier Detektoren gleich angeregt. Die Differenz des Zählers im vorerwähnten Ausdruck wird also zu Null, was bedeutet, daß kein Nachrichten erforderlich ist, weil der Glint auf dem Ziel gerade ohne Winkelablage anvisiert wird. Dieses rechnerische Ergebnis stellt sich in der Praxis allerdings nur ein, wenn alle vier Detektorelemente gleiche Empfindlichkeit aufweisen, weil sonst trotz gleicher Bestrahlung unterschiedliche Ausgangsamplituden und damit ein Nenner ungleich Null auftreten, obgleich das Zentrum des Zielreflexes (des Glint) bereits im Koordinatenmittelpunkt liegt. Eine absolut gleiche Empfindlichkeit aller Detektorelemente ist aber selbst mit ausgesuchten, also teuren Elementen nicht über den gesamten Betriebsbereich realisierbar, weil die Detektorelemente auf eine extrem hohe Bestrahlungsdynamik linear ansprechen müssen und weil außerdem die Empfindlichkeit der Detektorelemente zeit- und temperaturabhängig schwankt. Die einfache, vorstehend mathematisch erläuterte und in Fig. 8 der gattungsbildenden Vorveröffentlichung schaltungstechnisch dargestellte Summendifferenz-Schaltung mit Gewichtung (Division) durch die Summe der Ausgangsgrößen aller Detektorelemente führt also nur unter ganz bestimmten, günstigen Momentanbedingungen zu einer korrekten Winkelaussage, im Allgemeinen aber zu einer Verfälschung der Meßergebnisse und somit zu einer bleibenden Ablage zwischen Zielrichtung und Sensorausrichtung. Ein derartiger Glinttracker ist für die Belange der Praxis deshalb verbesserungsbedürftig.

Aus der DE 44 02 855 C2 der Anmelderin ist eine Einrichtung zur Abwehr eines ein Luftfahrzeug angreifenden Luftziel-Flugkörpers mit IR-Suchkopf bekannt, wobei das Luftfahrzeug mit einer Laserstrahlquelle ausgestattet ist, deren Laserstrahl über eine Nachführeinrichtung eines Zielverfolgungssystemes auf den angreifenden Luftziel-Flugkörper ausrichtbar ist. Der Laserstrahl dieser bekannten Einrichtung arbeitet in einem Frequenzband, das im Bereich der Detektionsfrequenz von IR-Suchköpfen liegt, er ist mit einer Frequenz getaktet, die der üblichen Redikel-Frequenz von IR-Suchköpfen entspricht.

Der Erfindung liegt die Aufgabe zugrunde, eine Zielerfassungsvorrichtung der eingangs genannten Art zu schaffen, bei welcher der Glinttracker bei einer optimalen Zuverlässigkeit der Elektronikeinrichtung im Vergleich zu bekannten Glinttrackern verbessert ist.

Diese Aufgabe wird bei einer Zielerfassungsvorrichtung der eingangs genannten Art erfindungsgemäß durch die Merkmale des Kennzeichenteiles des Anspruchs 1 gelöst. Bevorzugte Aus- bzw. Weiterbildungen der erfindungsgemäßen Zielerfassungsvorrichtung sind in den Unteransprüchen gekennzeichnet.

Die mit der erfindungsgemäßen Zielerfassungsvorrichtung erreichten Vorteile bestehen darin, daß der Glinttracker verbessert ist, daß die Zuverlässigkeit der Elektronikeinrichtung vergleichsweise hoch ist, und daß die Anforderungen an die Komponenten und Bauteile der Zielerfassungsvorrichtung sowie die Anforderungen an den Aufwand zum Abgleich der Elektronikeinrichtung relativ gering sind.

Weitere Einzelheiten, Merkmale und Vorteile ergeben sich aus der nachfolgenden Beschreibung eines in der Zeichnung schematisch dargestellten Ausführungsbeispieles der erfindungsgemäßen Zielerfassungsvorrichtung, d.h. des erfindungsgemäßen Glinttrackers. Es zeigen:

Fig. 1 schematisch in einer Blockdarstellung eine Ausbildung der Zielerfassungsvorrichtung, und

Fig. 2 in einer schematischen Darstellung den bei der Zielerfassungsvorrichtung gemäß Fig. 1 zur Anwendung gelangenden Vierquadranten-Detektors mit dem nachgeschalteten Vorverstärker.

Fig. 1 zeigt in einer Blockdiagrammdarstellung eine Ausbildung der Zielerfassungsvorrichtung 10 mit einer Laserstrahlquelle 12, einer der Laserstrahlquelle 12 zugeordneten optomechanischen Nachführeinrichtung 14, einer an die optomechanische Nachführeinrichtung angeschlossenen AGC (Automatic Gain Control) 16, einer mit der AGC 16 zusammengeschalteten Auswerte-Elektronikeinrichtung 18 und einer Antriebseinrichtung 20, die mit einer Laserstrahl-Ablenkeinrichtung 22 der optomechanischen Nachführeinrichtung 14 wirkverbunden ist.

Die optomechanische Nachführeinrichtung 14 weist einen der Laserstrahlquelle 12 zugeordneten Einkoppelspiegel 24 auf, der von der als Kippspiegel 26 ausgebildeten Laserstrahl-Ablenkeinrichtung 22 einen definierten Abstand aufweist und zum Kippspiegel 26 parallel orientiert ist.

Mit der Bezugsziffer 28 ist ein Glint eines Zielobjektes bezeichnet.

Die Laserstrahlquelle 12 ist von einem Impulslaser 30 gebildet. Der vom Impulslaser 30 abgestrahlte Laserstrahl trifft zuerst auf den ortsfest vorgesehenen Spiegel 24 der optomechanischen Nachführeinrichtung 14 und wird vom Spiegel 24 zum Kippspiegel 26 umgelenkt, von wo der gepulste Laserstrahl dann zum Glint 28 gerichtet wird. Der besagte Laserstrahl wird vom Glint 28 reflektiert. Der reflektierte Laserstrahl trifft wieder auf den Kippspiegel 26 der optomechanischen Nachführeinrichtung 14 auf, von wo er zu einer Sammellinseneinrichtung 34 gelenkt wird. Durch die Sammellinseneinrichtung 34 wird der reflektierte Laserstrahl auf einen Vierquadranten-Detektor 36 eines Empfängers 38 der optomechanischen Nachführeinrichtung 14 fokussiert.

Eine schematische Frontansicht des Vierquadranten-Detektors 36 ist in Fig. 2 gezeichnet. Wie aus dieser Figur ersichtlich ist, weist der Vierquadranten-Detektor 36 vier Quadrantendetektoren E1, E2, E3 und E4 auf. Durch die vier Quadrantendetektoren E1 bis E4 werden zwei orthogonale Raumrichtungs-Koordinaten x und y festgelegt. Jeder Quadrantendetektor E1, E2, E3 und E4 weist einen Ausgang 40 auf, an den ein Vorverstärker 42 konstanter Verstärkung angeschlossen ist. Der Vorverstärker 42 weist Ausgänge 44 auf, die mit Eingängen 46 des AGC 16 zusammengeschaltet sind.

Die Auswerte-Elektronikeinrichtung 18 weist Schalter S1, S2, S3 und S4 auf, die zu einer geeigneten Signal-Inversion der Ausgangssignale des AGC 16 vorgesehen sind, wie weiter unten beschrieben wird. Die Auswerte-Elektronikeinrichtung 18 weist außerdem eine Addier- und Dividier-Schaltung 48 und einen Regler 50 auf. Der vorzugsweise von einem PID-Regler gebildete Regler 50 besitzt Ausgänge 52 und 54, die mit der Antriebseinrichtung 20 zur definierten Verstellung des Kippspiegels 26 der Laserstrahl-Ablenkeinrichtung 22 zusammengeschaltet sind.

Die Funktionsweise der Zielerfassungsvorrichtung 10, d.h. des Glinttrackers ist wie folgt:

Nach dem Aussenden des gepulsten Laserstrahles von der Laserstrahlquelle 12 wird der gepulste Laserstrahl am Glint 28 reflektiert und zum Vierquadranten-Detektor 36 gelenkt. Entsprechend der jeweiligen Position des Glints 28 wird der reflektierte gepulste Laserstrahl auf wenigstens einen der vier Quadrantendetektoren E1, E2, E3 bzw. E4 fokussiert. Vom entsprechenden Quadrantendetektor E1, E2, E3 bzw. E4 wird ein Detektorsignal generiert, das am entsprechenden Ausgang 40 ansteht. Dabei gilt für die Zielablage $\Delta X$ in Richtung der x-Achse:

$$\Delta X = \frac{(E2 + E3) - (E1 + E4)}{E1 + E2 + E3 + E4}$$

Für die Zielablage $\Delta Y$ in Richtung der y-Achse gilt:

$$\Delta Y = \frac{E1 + E2 - E3 - E4}{E1 + E2 + E3 + E4}$$

Mit Hilfe der ermittelten Ablage-Signale, die mit Hilfe der Vorverstärker 42 verstärkt werden, wobei mit Hilfe der Addier- und Dividierschaltung 48 der Auswerte-Elektronikeinrichtung 18 die entsprechenden Berechnungen nach $\Delta X$ und $\Delta Y$ durchgeführt werden, wird mit Hilfe der Antriebseinrichtung 20 der Kippspiegel 26 der Laserstrahl-Ablenkeinrichtung 22 stets so bewegt, daß sich die Rückreflexion des gepulsten Laserstrahls von Glint 28 des jeweiligen Zieles immer im Zentrum 56 (sh. Fig. 2) des Vierquadranten-Detektors 36 befindet. Im Empfänger 38 werden zu diesem Zwecke zunächst die vom Vierquadranten-Detektor 36 empfangenen Laserimpulse in elektrische Signale umgewandelt, die an den Ausgängen 40 des Vierquadranten-Detektors 36 anstehen. Diese elektrischen Signale werden mit dem Vorverstärker 42 konstanter Verstärkung verstärkt. Die solchermaßen verstärkten elektrischen Signale werden durch die AGC 16 an die Auswerte-Elektronikeinrichtung 18 angepaßt. Das ist erforderlich, weil durch einen sich verändernden Abstand zwischen der Zielerfassungsvorrichtung 10 und dem Glint 28 eines entsprechenden Zieles sowie durch unterschiedliche Reflexions- bzw Rückstreuverhalten möglicher Ziele die Empfangsleistung sehr stark variieren kann. Die AGC 16 muß einen großen Verstärkungsbereich abdecken, da sich die Empfangsleistung mit der vierten Potenz des besagten Abstandes zwischen dem Glint 28 und der Zielerfassungsvorrichtung 10 verändert. Auch wenn ein Teil dieser Dynamik gegebenenfalls durch andere Komponenten wie bspw. eine Blendensteuerung abdeckbar ist, bleibt es dennoch schwierig, den nötigen Gleichlauf der Verstärkung der Ausgangssignale der Vierquadranten-Detektoren E1 bis E4 bei verschiedenen Verstärkungseinstellungen einzuhalten. Hier können sich auch Temperatureinflüsse sowie die Alterungsdrift der Bauteile bzw. Komponenten bemerkbar machen.

Nach der AGC 16 werden die Empfangssignale der Vierquadranten-Detektoren E1 bis E4 ausgewertet. Zu diesem Zwecke kann bspw. jeweils das Maximum der Amplitude aller vier Kanäle ermittelt und in der Addier- und Dividierschaltung 48 weiterverarbeitet werden.

Wie bereits ausgeführt worden ist, arbeitet die Zielerfassungsvorrichtung 10 mit einer gepulsten Laserstrahlquelle 12. Dadurch ist es möglich, mit den Schaltern S1 bis S4 der Auswerte-Elektronikeinrichtung 18 (sh. Fig. 1) die Auswertekanäle zwischen den Laserimpulsen geeignet zu tauschen, wobei die Schalter S1 und S3 die Kanäle der Quadrantendetektoren E1 und E3 und die Schalter S2 und S4 die Auswertekanäle der Quadrantendetektoren E2 und E4 invertieren bzw. tauschen, so daß alle durch die Auswerte-Elektronikeinrichtung 18 möglicherweise entstehenden Fehler kompensiert werden.

Die Schalter S1 bis S4 dienen also dazu, bei jedem zweiten Impuls die Ausgänge bzw. Kanäle der diametral gegenüberliegenden Quadrantendetektoren E1 und E3 bzw. E2 und E4 zu vertauschen. Dadurch wird bewirkt, daß die ermittelten Ablagen $\Delta$ X und $\Delta$ Y invertiert, d.h. aus positiven Ablagen negative Ablagen, und umgekehrt, werden. Durch weitere elektronische Schalter,die abwechselnd die ermittelten Ablagen $\Delta$ X und $\Delta$ Y nicht invertieren oder invertieren, werden die ermittelten Ablagen wieder korrigiert. Auf diese Weise ergibt sich mit relativ einfachen Mitteln ein exakt funktionierender Glinttracker mit einer erhöhten Zuverlässigkeit der Elektronikeinrichtung, wobei die Anforderungen an die Bauteile der Einrichtung 10 und der Abgleich der Elektronikeinrichtung vergleichsweise einfach möglich sind.

## Patentansprüche

1. Zielerfassungsvorrichtung (10) mit einer Laserstrahlquelle (12) zum Hervorrufen eines Glint (28) auf einem anvisierten Ziel und mit einer optomechanischen Glintreflex-Nachführeinrichtung (14) mit einem Vierquadranten-Detektor (36) dessen Detektorelemente (Di; i = 1,..., 4) auf eine Addier-Dividier-Schaltung (48) zum Liefern von Ablageinformationen für die Nachführeinrichtung (14) geschaltet sind,
   **dadurch gekennzeichnet,**
   **daß** die einander diametral gegenüberliegenden Ausgänge der Detektorelemente (Di) über ihnen zugeordnete Schalter (Si) im Takt der gepulsten Laserstrahlquelle (12) zyklisch miteinander vertauscht werden.

2. Zielerfassungsvorrichtung nach Anspruch 1,
   **dadurch gekennzeichnet,**
   **daß** jeder Quadrantendetektor (E1, E2, E3, E4) einen Ausgang (40) aufweist, an den ein Vorverstärker (42) zur Verstärkung der jeweiligen Detektorsignale angeschlossen ist.

3. Zielerfassungsvorrichtung nach Anspruch 2,
   **dadurch gekennzeichnet,**
   **daß** die Vorverstärker (42) eine konstante Verstärkung aufweisen.

4. Zielerfassungsvorrichtung nach Anspruch 1 und 2,
   **dadurch gekennzeichnet,**
   **daß** die Laserstrahlquelle (12) von einem Impulslaser (30) gebildet ist, und daß die Ausgänge (44) der Vorverstärker (42) der Quadrantendetektoren (E1, E2, E3, E4) mit einer AGC (16) zusammengeschaltet sind, die mit der Auswerte-Elektronikeinrichtung (18) verbunden ist.

5. Zielerfassungsvorrichtung nach einem der Ansprüche 1 bis 4,
   **dadurch gekennzeichnet,**
   **daß** die Auswerte-Elektronikeinrichtung (18) eine Addier- und Dividierschaltung (48) und einen Regler (50) aufweist.

6. Zielerfassungsvorrichtung nach Anspruch 5,
   **dadurch gekennzeichnet,**
   **daß** die optomechanische Nachführeinrichtung (14) eine Laserstrahl-Ablenkeinrichtung (22) aufweist, die mit einer Antriebseinrichtung (20) verbunden ist, und daß die Antriebseinrichtung (20) mit dem Regler (50) der Auswerte-Elektronikeinrichtung (18) zusammengeschaltet ist.

7. Zielerfassungsvorrichtung nach Anspruch 5 oder 6,
   **dadurch gekennzeichnet,**
   **daß** der Regler (50) als PID-Regler ausgebildet ist.

## Claims

1. A target-detecting device (10) with a laser-beam source (12) for producing a glint (28) on a sighted target and with opto-mechanical glint-reflex tracking means (14) including a four-quadrant detector (36), of which the detector elements (Di; i = 1,..., 4) are connected to an adding/dividing circuit (48) for supplying deviation information for the tracking means (14),
   **characterized in that**
   the outputs diametrically opposite one another of the detector elements (Di) are cyclically exchanged with one another by way of associated switches (Si) in the cycle of the pulsed laser-beam source (12).

2. A target-detecting device according to Claim 1,
   **characterized in that**
   each quadrant detector (E1, E2, E3, E4) has an output (40), to which a preamplifier (42) is connected for amplifying the respective detector signals.

3. A target-detecting device according to Claim 2,
   **characterized in that**
   the pre-amplifiers (42) have a constant amplification.

4. A target-detecting device according to Claim 1 and 2,
**characterized in that**
the laser-beam source (12) consists of a pulsed laser (30), and **in that** the outputs (44) of the pre-amplifiers (42) of the quadrant detectors (E1, E2, E3, E4) are interconnected with an AGC (16) which is connected to the electronic evaluating means (18).

5. A target-detecting device according to one of Claims 1 to 4,
**characterized in that**
the electronic evaluating means (18) include an adding and dividing circuit (48) and a controller (50).

6. A target-detecting device according to Claim 5,
**characterized in that**
the opto-mechanical tracking means (14) include laser-beam-deflecting means (22), which are connected to driving means (20), and **in that** the driving means (20) are interconnected with the controller (50) of the electronic evaluating means (18).

7. A target-detecting device according to Claim 5 or 6,
**characterized in that**
the controller (50) takes the form of a PID controller.

**Revendications**

1. Dispositif d'acquisition de cible (10) comportant une source de rayon laser (12) pour provoquer un scintillement (28) sur une cible visée et comportant un dispositif de poursuite de reflet du scintillement (14) optomécanique avec un détecteur à quatre quadrants (36) dont les éléments de détection (Di ; i = 1,..., 4) sont montés sur un circuit d'addition et de division (48) pour fournir des informations de dérive pour le dispositif de poursuite (14), **caractérisé en ce que** les sorties diamétralement opposées les unes aux autres des éléments de détection (Di) sont échangées cycliquement entre elles par des interrupteurs (Si) qui leur sont associés, au rythme de la source de rayon laser (12) pulsée.

2. Dispositif d'acquisition de cible selon la revendication 1, **caractérisé en ce que** chaque détecteur à quadrants (E1, E2, E3, E4) comporte une sortie (40) à laquelle est raccordé un pré-amplificateur (42) pour amplifier les signaux respectifs des détecteurs.

3. Dispositif d'acquisition de cible selon la revendication 2, **caractérisé en ce que** les pré-amplificateurs (42) présentent une amplification constante.

4. Dispositif d'acquisition de cible selon les revendications 1 et 2, **caractérisé en ce que** la source de rayon laser (12) est formée par un laser à impulsions (30) et **en ce que** les sorties (44) des pré-amplificateurs (42) des détecteurs à quadrants (E1, E2, E3, E4) sont montées en circuit avec une AGC (16) qui est reliée au dispositif électronique d'exploitation (18).

5. Dispositif d'acquisition de cible selon l'une des revendications 1 à 4, **caractérisé en ce que** le dispositif électronique d'exploitation (18) comporte un circuit d'addition et de division (48) et un régulateur (50).

6. Dispositif d'acquisition de cible selon la revendication 5, **caractérisé en ce que** le dispositif de poursuite (14) optomécanique comporte un dispositif de déviation de rayon laser (22) qui est relié à un dispositif d'entraînement (20), et **en ce que** le dispositif d'entraînement (20) est monté en circuit avec le régulateur (50) du dispositif électronique d'exploitation (18).

7. Dispositif d'acquisition de cible selon la revendication 5 ou 6, **caractérisé en ce que** le régulateur (50) est réalisé sous la forme d'un régulateur PID.

FIG.1

FIG.2